# EUROPEAN PATENT SPECIFICATION

(11) **EP 0 669 477 B1**
(45) Date of publication and mention of the grant of the patent: **16.09.1998**
(21) Application number: 94309443.3
(22) Date of filing: 16.12.1994
(51) Int. Cl.: F16D 3/84, F16J 3/04

(54) **Protective bellows**
Schutzbalg
Soufflet de protection

(30) Priority: 24.02.1994 GB 9403501
(43) Date of publication of application: 30.08.1995
(73) Proprietor: DRAFTEX INDUSTRIES LIMITED, Edinburgh EH2 3AP, Scotland (GB)
(72) Inventor: Renzo, Bernard, F-44300 Nantes (FR); Boyen, Remi, F-44300 Nantes (FR)
(74) Representative: Foster, David Martyn

(56) References cited:
- EP-A- 0 249 528
- EP-A- 0 565 344
- US-A- 4 235 427
- US-A- 4 730 834

## Description

The invention relates to a protective bellows made of thermoplastic material and having a plurality of integrally connected bellows turns each having a respective peak and trough.

Such a bellows is shown in US-A-4 735 596. In this bellows, the first bellows turn adjacent one end of the bellows has a crest or peak which is thinner than the crests or peaks of the other bellows turn. Therefore, this first bellows turn preferentially partially collapses when the bellows is compressed lengthwise. In such an arrangement, greater wear may be imposed on the first bellows turns.

A bellows as first set forth above is also known from US-A-4 923 432. In this known bellows, the troughs of the bellows turns are progressively thinner along the length of the bellows. This may complicate manufacture.

In accordance with the invention, the known bellows is characterised in that in each of the bellows turns, the ratio of the smallest thickness at its peak to the greatest thickness at its trough is less than about 2.3, and in that the said greatest thickness is less than about 1.25 mm.

A protective bellows embodying the invention will now be described, by way of example only, with reference to the accompanying diagrammatic drawings in which:
Figure 1 is a diagrammatic side elevation, partly in cross-section, of one of the bellows, showing it in a free state before fitment;
Figure 2 is a side elevation showing the bellows of Figure 1 fitted in position on the front wheel drive transmission of a motor vehicle, the Figure showing the bellows in the configuration which it adopts when the drive shaft is turned through a sharp angle; and
Figure 3 is an enlarged view of one of the turns of the bellows of Figure 1.

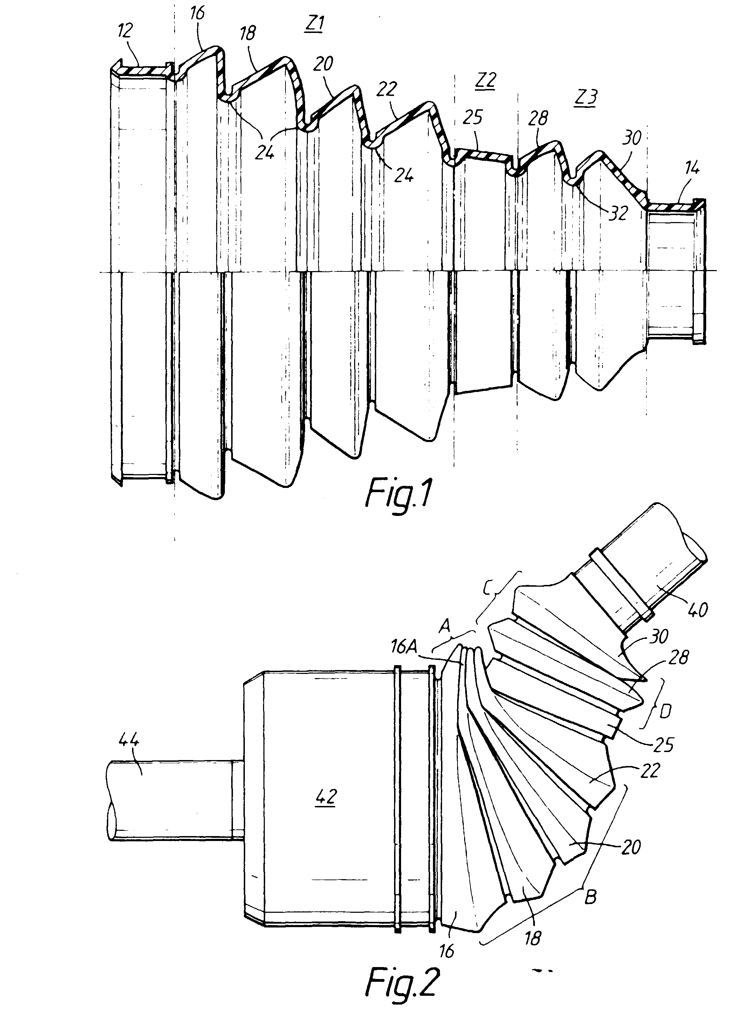

The bellows described is advantageously made of thermoplastic material. As shown in Figure 1, the bellows comprises integrally connected bellows turns arranged in three separate zones, to be described in detail below, and extending between a large diameter fixing collar 12 at one end and a small diameter fixing collar 14 at the opposite end. The first zone Z1 is a zone of high flexibility and, in this example, comprises bellows turns 16,18,20 and 22 arranged on a conical generatrix, each bellows turn being connected to the next one by means of a respective trough 24.

The next zone Z2 comprises a single turn 25 which is substantially cylindrical that is, the surface of the turn is substantially parallel to the axis 26 of the bellows.

The third zone Z3 is a zone of low flexibility and comprises bellows turns 28 and 30 interconnected by a trough 32 and arranged on a slightly conical generatrix.

Figure 2 shows the bellows of Figure 1 mounted in position on the front wheel drive transmission of a motor vehicle. The drive transmission comprises a drive shaft 40 which is connected to the output end of the gearbox/differential assembly via a universal joint incorporated within a casing or bowl 42. Thus, the collar 12 of the bellows is fitted around the outside of the casing 42 and is clamped in position by a metal clamp, not shown. Similarly, the collar 14 of the bellows is clamped around the shaft 40 and held in position by another clamp, also not shown. When the bellows is fitted in position in this way on the drive transmission, it is compressed to a certain extent in a longitudinal direction.

Figure 2 shows the configuration adopted by the bellows when the drive shaft 40 has maximum angularity - that is, corresponding to maximum angular movement of the universal joint; in other words, the drive shaft 40 has maximum angularity with reference to the output shaft 44 from the gearbox/differential assembly. The Figure shows how the respective configurations of the bellows turns of the zones Z1 and Z3, and of the neutral zone Z2, cooperate to produce different bending conditions in the zones Z1 and Z3.

Considering the zone Z1, it will be observed that the bellows turns undergo compression over the region A, and undergo extension over the region B. Over the region A, the bellows turns become "piled up" into contact with the face 16A of the bellows turn 16. The thicknesses of the troughs of the bellows determine the pressure between adjacent turns and thus the stress and wear.

The bellows turns 28 and 30 of the zone Z3 undergo extension and compression as well. However, the bellows turns of the zone Z3 are extended over a region C which lies on the same side of the shaft 40 as the region A over which the bellows turns of the zone Z1 are compressed. Similarly, the region D over which the bellows turns of the zone Z3 are compressed lies on the same side of the shaft 40 as the region B over which the bellows turns of the zone Z1 are stretched or extended.

The bellows turns have to be configured so that they do not buckle or become deformed when subjected to the maximum compression or maximum extension.

During maximum angularity as shown in Figure 2, the inside of the single bellows turn 25 of the neutral zone Z2 may come into contact with the shaft 40.

The number of bellows turns within the zone Z1 should be relatively low so as to limit turn-to-turn pressure.

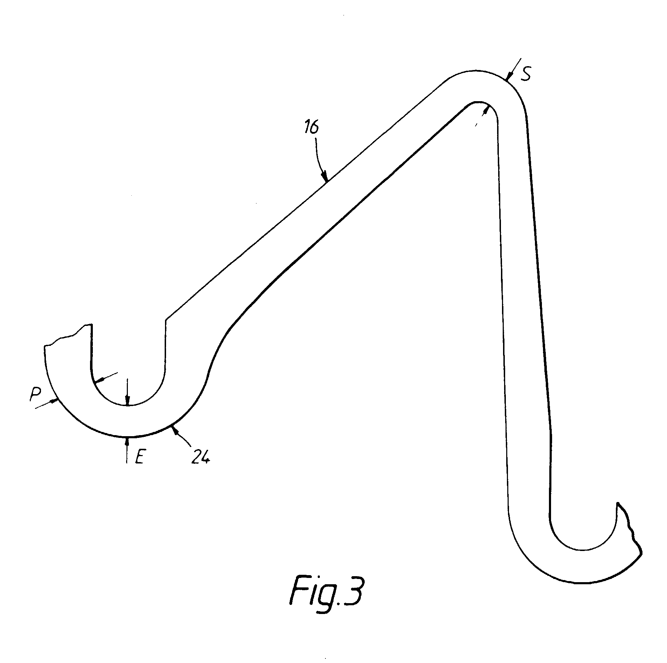

Figure 3 shows one of the bellows turns 16 in its "free" condition (that is, before the bellows is fitted to the transmission system). For optimum performance of the bellows and reduced wear, it has been found that the shape and relative dimensions of the bellows tuns should be as shown in Figure 3, where
(a) P should be less than 1.25mm;
(b) S/P should be less than 2.3; and
(c) 1.0 ≤ P/E ≤ 1.25.

S is the smallest thickness at the peak of the bellows turn, P the maximum thickness at the trough and E is the minimum thickness at the trough.

Such an arrangement contrasts with hitherto known arrangements in which the thickness of the trough is greater than the thickness at the peak.

In addition, it will be noted that the trough of the bellows turn is U-shaped in cross-section with substantially straight opposite sides and a base which is part of a circle, the depth and length being between 0.8 and 2 mm.

## Claims

1. A protective bellows made of thermoplastic material and having a plurality of integrally connected bellows turns (16,18,20,22,28,30) each having a respective peak and trough (24), characterised in that, in each of the bellows turns (16,18,20,22,28,30), the ratio of the smallest thickness (S) at its peak to the greatest thickness (P) at its trough (24) is less than about 2.3, and in that the said greatest thickness (P) is less than about 1.25 mm.

2. A bellows according to claim 1, characterised in that the ratio of the greatest thickness (P) at the trough (24) of each said bellows turn (16,18,20,22,28,30) to the smallest thickness (E) of each trough (24) lies between 1.0 and 1.25.

3. A bellows according to claim 1 or 2, characterised in that, in each turn (16,18,20,22,28,30) of the bellows, the trough (24) is U-shaped in cross-section with substantially straight opposite sides and a base which is part of a circle, the depth and length being between 0.8 and 2 mm.

4. A bellows according to claim 1 or 2, characterised in that the bellows turns are arranged in zones arranged axially with respect to each other along the length of the bellows, there being a first zone (Z1) whose bellows turns (16-22) are configured to provide relatively high flexibility to angular bending of the bellows relative to its axis, another zone (Z3) in which the or each of its bellows turns (28,30) is configured to provide relatively low flexibility to angular bending of the bellows relative to its axis, and a neutral zone (Z2) which integrally interconnects the other two zones (Z1,Z3) and comprises a connection (25) which is relatively resistant to angular bending within the zone (Z2).

## Patentansprüche

1. Schutzbalg aus thermoplastischem Material mit einer Mehrzahl einstückig miteinander verbundener Balgfaltungen (16, 18, 20, 22, 28, 30), von denen jede eine entsprechende Spitze und Senke (24) aufweist,
**dadurch gekennzeichnet,**
daß in jeder der Balgfaltungen (16, 18, 20, 22, 28, 30) das Verhältnis der geringsten Dicke (S) an ihrer Spitze zu der größten Dicke (P) an ihrer Senke (24) weniger als ungefähr 2,3 ist, und daß die größte Dicke (P) weniger als ungefähr 1,25 mm beträgt.

2. Schutzbalg nach Anspruch 1, dadurch gekennzeichnet, daß das Verhältnis der größten Dicke (P) an der Senke (24) jeder Balgfaltung (16, 18, 20, 22, 28, 30) zu der geringsten Dicke (E) jeder Senke (24) zwischen 1,0 und 1,25 liegt.

3. Schutzbalg nach Anspruch 1 oder 2, dadurch gekennzeichnet, daß die Senke (24) an jeder Faltung (16, 18, 20, 22, 28, 30) des Balgs im Querschnitt U-förmig mit im wesentlichen geraden gegenüberliegenden Seiten und einer Basis geformt ist, die Teil eines Kreises ist, wobei die Tiefe und Länge zwischen 0,8 und 2 mm beträgt.

4. Schutzbalg nach Anspruch 1 oder Anspruch 2, dadurch gekennzeichnet, daß die Balgfaltungen in axial zueinander entlang der Länge des Balges angeordneten Zonen angeordnet sind, mit einer ersten Zone (Z1), deren Balgfaltungen (16 - 22) gestaltet sind, um eine relativ hohe Flexibilität bereitzustellen, um den Balg relativ zu seiner Achse im Winkel zu biegen, einer weiteren Zone (Z3), in der die oder jede ihrer Balgfaltungen (28, 30) gestaltet ist, eine relativ geringe Flexibilität bereitzustellen, um den Balg relativ zu seiner Achse im Winkel zu biegen, und einer neutralen Zone (Z2), die einstückig die anderen zwei Zonen (Z1, Z3) miteinander verbindet und eine Verbindung (25) aufweist, die vergleichsweise widerstandsfähig gegen ein seitliches Biegen innerhalb der Zone (Z2) ist.

## Revendications

1. Soufflet de protection fabriqué en matière thermoplastique et ayant plusieurs plis de soufflet reliés d'un seul tenant (16, 18, 20, 22, 28, 30) ayant chacun un sommet et un creux (24) respectifs, caractérisé en ce que, dans. chacun des plis de soufflet (16, 18, 20, 22, 28, 30), le rapport de l'épaisseur la plus faible (S) au niveau de son sommet sur l'épaisseur la plus grande (P) au niveau de son creux (24) est inférieur à environ 2,3, et en ce que ladite épaisseur la plus grande (S) est inférieure à environ 1,25 mm.

2. Soufflet selon la revendication 1, caractérisé en ce que le rapport de l'épaisseur la plus grande (P) au niveau du creux (24) de chaque dit pli de soufflet (16, 18, 20, 22, 28, 30) sur l'épaisseur la plus faible (S) de chaque creux (24) s'étend entre 1 et 1,25.

3. Soufflet selon la revendication 1 ou 2, caractérisé en ce que, dans chaque pli (16, 18, 20, 22, 28, 30) du soufflet, le creux (24) est d'une section en forme de U avec des côtés opposés essentiellement droits et une base qui est une partie d'un cercle, la profondeur et la longueur étant entre 0,8 et 2 mm.

4. Soufflet selon la revendication 1 ou 2, caractérisé en ce que les plis de soufflet sont disposés dans des zones agencées axialement l'une par rapport à l'autre sur la longueur du soufflet, une première zone (Z1) dont les plis de soufflet (16 à 22) sont configurés afin de procurer une flexibilité relativement élevée lors de la flexion angulaire du soufflet par rapport à son axe, une autre zone (Z3) dans laquelle le ou chacun des plis de soufflet (28, 30) est configuré afin de procurer une flexibilité relativement faible lors la flexion angulaire du soufflet par rapport à son axe, et une zone neutre (Z2) qui relie d'un seul tenant les deux autres zones (Z1, Z3) et comporte une liaison (25) qui est relativement résistante à la flexion angulaire dans la zone (Z2) étant prévues.
